# EUROPEAN PATENT APPLICATION

(11) **EP 1 016 863 A1**
(43) Date of publication of application: **05.07.2000**
(21) Application number: 98943043.4
(22) Date of filing: 18.09.1998
(51) Int. Cl.: G01N 23/06, G01N 23/20, G01N 23/223

(54) **HIGH VACUUM XAFS MEASURING INSTRUMENT**

(30) Priority: 19.09.1997 JP 25582097; 19.09.1997 JP 25582197
(71) Applicant: Japan Science and Technology Corporation, Kawaguchi-shi, Saitama-ken 332-0012 (JP); KABUSHIKI KAISHA TOSHIBA, Kawasaki-shi, Kanagawa-ken 210-8572 (JP); Rigaku Corporation, Akishima-shi, Tokyo 196 (JP)
(72) Inventor: TANAKA, Shun-ichiro, Yokohama-shi Kanagawa 246-0015 (JP); MUNEKAWA, Shigeru, Nerima-ku Tokyo 178-0061 (JP)
(74) Representative: Granleese, Rhian Jane
(86) International application number: JP9804212
(87) International publication number: WO9915885

(57) **Abstract**

The X-ray emitted from an X-ray generator is spectroscopically separated by a curved crystal and is then received by a focusing slit. The input X-ray after passing through the focusing slit is initially measured with an I₀-X ray detector comprising a photoelectron multiplier and is applied to a sample. The X-ray transmitting through the sample or a fluorescent X-ray from the sample is detected with an I-X detector. The X-ray path from the outgoing portion of the X-ray generator to the focusing slit is a vacuum path, and the I-X detector, a sample holder and the I-X ray detector are disposed inside a vacuum chamber connected to the vacuum path while being kept in vacuum. Further, a heat-treatment apparatus for subjecting sequentially the sample to heat-treatment and cooling-treatment in a vacuum atmosphere, connected to the vacuum chamber while being kept in a vacuum state, can be provided additionally. This high vacuum XAFS measuring instrument can perform XAFS measurement in high vacuum with high energy resolution and high accuracy. Particularly, the instrument can measure excellently light element XAFS on a laboratory level.

## Description

### Technical Field

The present invention relates to a high vacuum XAFS (X-ray Absorption Fine Structure) measuring instrument.

### Background Art

In ceramic bonded bodies or semiconductor devices constituted of various kinds of thin films, in elucidating interface states and mechanical or electrical characteristics based on the interface states, the interface nanostructures or electronic states thereof and elementary processes of reactions at the interfaces are necessary to be measured and evaluated.

However, with a generally used X-ray excited photoelectron spectrometer (XPS) or an Auger Electron Spectrometer (AES), it is difficult to take information out of the interface of from approximately several hundreds nm to 1 µm from the surface. On the other hand, a transmission electron microscope (TEM) or an X-ray diffractometer (XRD), though allowing analyzing an arrangement of atoms at the interface, can not measure and evaluate the state of chemical bonding and electronic state.

Meanwhile, XAFS (X-ray Absorption Fine Structure) is based on the local physical phenomena in which photoelectrons emitted from X-ray absorbing central atoms are scattered by the surrounding atoms. Accordingly, through selection of the central atoms, structural parameters such as distances from the central atom to the surrounding atoms and the number thereof (coordination number) can be obtained. As a result, by use of X-rays of large penetration depth to measure XAFS that is information of a few atomic layers, the interface structures or electronic states thereof can be measured and evaluated.

However, an existing XAFS measuring instrument, not necessarily demanding a vacuum, is generally operated in the atmosphere. When carrying out the measurement of ceramic bonded bodies or semiconductor elements in the atmosphere, samples are subjected to oxidation or the like. As a result, with the existing XAFS measuring instruments, it has been difficult to measure accurately and evaluate the interface structures or electronic states of various kinds of thin films, and elementary processes of reactions at the interfaces.

On the other hand, a XAFS measuring instrument that enables to measure in a vacuum or He atmosphere has been developed. However, since an existing XAFS measuring instrument that can be used in a vacuum has a complicated structure, sufficient resolution has not been obtained. In addition, since, due to the use of an I₀-X ray detector the intensity of X-rays is decreased, there is a disadvantage that X-rays being irradiated on a sample can not be maintained at a level of sufficient amount. The decrease of the intensity of X-rays results in decrease of measurement accuracy.

In particular, in the field of ceramics and semiconductors, measurement of light elements such as Al, Si or the like is important. However, with an existing XAFS measuring instrument, it has been difficult to implement measurement of XAFS of light elements with good quality in a laboratory.

As described above, with the existing XAFS measuring instrument that measures in the atmosphere, due to oxidation or the like during measurement, accurate and detailed measurement and evaluation can not be carried out. On the other hand, an existing XAFS measuring instrument that can carry out measurement in a vacuum, due to complicated mechanism or the like, has a disadvantage that it can not give sufficient resolution. In particular, in the field of ceramics and semiconductors, though measurement of light elements such as Al, Si or the like is important, it has not been realized yet to implement measurement of the XAFS of light elements with good quality in a laboratory.

An object of the present invention is to provide a high vacuum XAFS measuring instrument capable of carrying out measurement of XAFS with high resolution and high precision in a vacuum. Another object of the present invention is to provide a high vacuum XAFS measuring instrument capable of carrying out, without causing change of state of the samples, accurate measurement and evaluation of interface structures and electronic states of various kinds of samples with high resolution and high precision. In particular, it is still another object of the present invention to provide a high vacuum XAFS measuring instrument capable of carrying out measurement of good quality in a laboratory.

### Disclosure of Invention

A first high vacuum XAFS measuring instrument of the present invention comprises an X-ray generator having an X-ray exit letting X-rays go out, a monochromator for carrying out spectroscopic separation of X-rays outgoing from the X-ray exit, a sample chamber for receiving X-rays separated by the monochromator, an I₀-X ray detector having a photoelectron multiplier detecting X-rays incoming to the sample chamber, a sample holder for holding a sample which the X-rays initially measured by the I₀-X ray detector are irradiated, an I-X ray detector for detecting X-rays transmitted through the sample, or fluorescent X-rays from the sample, a supporting unit for driving so as to maintain a focusing circle of a definite diameter that goes through the X-ray generator and the monochromator and X-ray receptor, a vacuum path for maintaining an X-ray path of from the X-ray exit to the X-ray receptor in a vacuum, a vacuum chamber provided with the I₀-X ray detector, the sample holder and I-X ray detector, and connected with the vacuum path maintaining a vacuum state, and a controller for controlling the supporting unit, the I₀-X ray detector and I-X ray detector.

A second high vacuum XAFS measuring instrument of the present invention comprises an X-ray generator having an X-ray exit letting X-rays go out, a monochromator for carrying out spectroscopic separation of X-rays going out of the X-ray exit, an X-ray receptor for receiving X-rays separated by the monochromator, an I₀-X ray detector for detecting the X-rays gone through the X-ray receptor, a sample holder for holding a sample thereon the X-rays measured initially by the I₀-X ray detector are irradiated, an I-X ray detector for detecting transmitted X-rays through or X-rays reflected from the sample or fluorescent X-rays from the sample, a supporting unit for driving so as to maintain a concentration circle of a definite diameter that goes through the X-ray generator and the monochromator and the X-ray receptor, a vacuum path for maintaining an X-ray path of from the X-ray exit to the X-ray receptor in a vacuum, a vacuum chamber provided with the I₀-X ray detector, the sample holder and a photo-receiving surface of the I-X ray detector, and connected to the vacuum path while maintaining a vacuum, a heat treatment unit that carries out successively heating and cooling of the sample in a vacuum atmosphere and is connected to the vacuum chamber maintaining a vacuum, and a counting controller for controlling the supporting unit, the I₀-X ray detector and I-X ray detector.

In the first high vacuum XAFS measuring instrument of the present invention, an X-ray path of from an exit of an X-ray generator to a X-ray receptor is a vacuum path and an I₀-X ray detector, a sample holder and a photo-receiving surface of an I-X ray detector are disposed inside a vacuum chamber. In addition to this, for an I₀-X ray detector, a photoelectron multiplier capable of being disposed in a vacuum and remarkably small in attenuation of the intensity of X-rays is employed. With these, the intensity of X-rays irradiated on a sample can be maintained strong enough. Accordingly, XAFS measurement can be carried out with high precision for various kinds of samples.

In particular, XAFS measurement of light elements such as Al, Si or the like can be implemented with good quality in a laboratory. In addition, due to implementation of XAFS measurement in a high vacuum, the change of state of a sample due to oxidation or the like can be prevented from occurring. Accordingly, more accurate measurement and evaluation can be implemented.

According to a second high vacuum XAFS measuring instrument of the present invention, as identical with the first XAFS measuring instrument, the intensity of X-rays being irradiated on a sample can be maintained strong enough. As a result, measurement of XAFS of various kinds of samples, particularly of XAFS of light elements such as Al, Si or the like can be carried out with good quality in a laboratory.

Furthermore, the second high vacuum XAFS measuring instrument comprises a heat treatment unit connected in a vacuum with a vacuum chamber therein a sample holder is disposed. Accordingly, not only the sample can be held in a high vacuum, but also heat treatment from pretreatment of samples to XAFS measurement and in the process of measurement of XAFS can be carried out maintaining a high vacuum. By use of such a heat treatment device, without promoting the change of state of samples, information interface of and elementary processes of reactions of various kinds of samples can be measured and evaluated accurately.

### Brief Explanation of the Drawings

Fig. 1 is a diagram showing a schematic configuration of a first embodiment in which a first high vacuum XAFS measuring instrument of the present invention is applied in an X-ray optics for fluorescence measurement;
Fig. 2 is a diagram showing a schematic configuration of a second embodiment in which a first high vacuum XAFS measuring instrument of the present invention is applied in an X-ray optics for transmission measurement;
Fig. 3 is a diagram showing a schematic configuration of a first embodiment in which a second high vacuum XAFS measuring instrument of the present invention is applied in an X-ray optics for fluorescence measurement;
Fig. 4 is a diagram showing one constitution example of a high temperature treatment furnace disposed to a high vacuum XAFS measuring instrument illustrated in Fig. 3;
Fig. 5 is a diagram showing a schematic configuration of a second embodiment in which a second high vacuum XAFS measuring instrument of the present invention is applied in an X-ray optics for transmission measurement.

### Embodiments for Carrying Out the Invention

In the following, embodiments for carrying out the present invention will be explained.

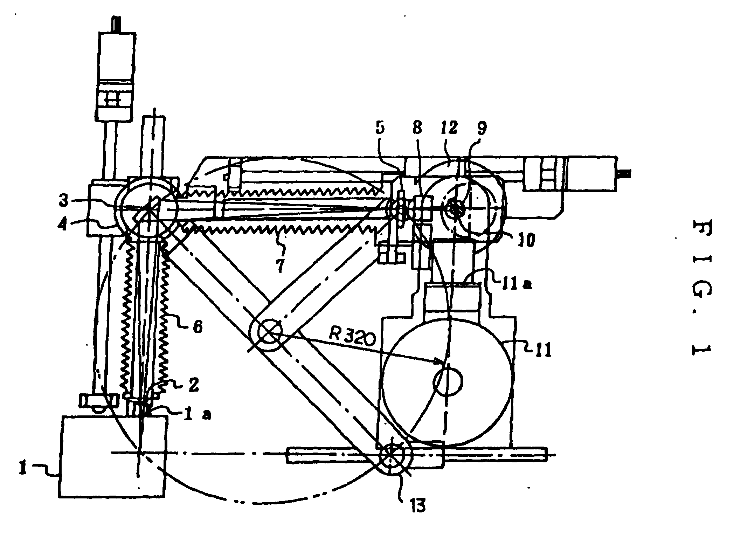

Fig. 1 is a diagram showing a schematic configuration of a first embodiment in which a first high vacuum XAFS measuring instrument of the present invention is applied in an X-ray optics for fluorescence measurement.

In the same figure, reference numeral 1 denotes an X-ray generator for generating X-rays. For the X-ray generator 1, in order to improve resolution and to secure enough X-ray intensity, a rotating-anode X-ray generator of high output power such as 18 kV-1A is used. The X-ray generator 1 has an exit 1a letting an X-ray beam emitting.

An X-ray beam emitted from 1a of the X-ray generator 1, after restricted by a, for instance, 1/4 to 4° divergence slit 2, is spectroscopically separated by use of a curved crystal 3 as a monochromator. For such curved crystals 3, for instance, Ge (111), Ge (220), Ge (311), Ge (840), ADP (101) or the like can be used.

These curved crystals 3 are disposed in a crystal chamber 4 capable of maintaining a vacuum (vacuum chamber) and can be finely adjusted in a vacuum. The curved crystals 3 can be automatically exchanged. In this case, the crystal chamber 4 is provided with a unit with which a plurality of curved crystals 3 can be automatically exchanged in a vacuum. X-rays monochromated by the curved crystal 3 are detected by a photoreceptor having a receiving slit 5 of, for instance, 0.05 to 2 mm.

An X-ray path from the exit 1a of the X-ray generator 1 to the crystal chamber 4, and an X-ray path of from the crystal chamber 4 to the focusing slit 5 are constituted of vacuum paths 6 and 7 of welded bellows, respectively. The X-ray path of from the exit 1a of the X-ray generator 1 to the focusing slit 5 is maintained in a high vacuum by the vacuum paths 6 and 7 of welded bellows. The X-ray path is capable of maintaining a high vacuum of, for instance, 10⁻⁵ Torr or better. By the way, the respective vacuum paths 6 and 7 go with, for instance, a goniometer 13 that will be explained later.

On the path of X-rays being received by the focusing slit 5, an I₀-X ray detector 8 and a sample holder 9 as a sample holding portion are disposed. That is, the X-rays received by the focusing slit 5 are irradiated on a sample 10 held in a sample holder 9 through an I₀-X ray detector 8. A photoelectron multiplier is used for the I₀-X ray detector 8.

Here, in an existing XAFS measuring instrument, as an I₀-X ray detector, a shielded proportional counter (S-PC), a flow type proportional counter (F-PC) or the like have been used. These have gases for detection use (such as Ne, Ar, Xe or the like) and a window for use with counter (Be, or Mylar, Kapton or the like) in the passage of X-rays. As a result of this, input X-rays (primary X-rays) are attenuated so much as, for instance, 20 to 80 % to result in inadequacy of measurement of XAFS of light elements particularly in a laboratory. Furthermore, the existing I₀-X ray detectors such as S-PC, F-PC or the like are difficult to dispose in a high vacuum.

On the other hand, a photoelectron multiplier that is used for an I₀-X ray detector 8 in the present invention need only insert a relatively small electrode into a passage of X-rays to obtain photoelectrons as signal. Accordingly, an attenuation of X-rays before irradiation onto a sample 10 being measured can be suppressed as small as possible. For instance, according to an I₀-X ray detector 8 consisting of a photoelectron multiplier, the attenuation of input X-rays can be made such small as approximately 1 to 20 %.

There is known a mechanism for measuring I₀-X rays and I-X rays depending an whether a sample exists on an X-ray passage or not. However, in order to realize an improvement of accuracy of measurement and rapid measurement I₀-X rays and I-X rays are necessary to be measured simultaneously. From these points of view, an I₀-X ray detector 8 consisting of a photoelectron multiplier produces a remarkable effect.

The XAFS measuring instrument illustrated in Fig. 1 possesses an I-X ray detector 11 for measuring fluorescent X-rays from a sample 10. For an I-X ray detector 11, an SSD is used, for instance.

The aforementioned I₀-X ray detector 8, the sample holder 9 and the photo-receiving surface 11a of the I-X ray detector 11 are disposed inside a vacuum chamber 12 capable of maintaining a high vacuum of, for Instance, 10⁻⁵ Torr or better. The vacuum chamber 12 and the aforementioned vacuum path 7 are connected by use of vacuum maintaining method. That is, an entire X-ray path of from an exit 1a of an X-ray generator 1 to a photo-receiving surface 11a of an I-X ray detector 11 is capable of maintaining a high vacuum of, for instance, 10⁻⁵ Torr or better.

By the way, though not shown in Fig. 1, the high vacuum XAFS measuring instrument of this embodiment is provided with a vacuum pump that makes an X-ray path from an exit 1a of an X-ray generator 1 to a photo-receiving surface 11a of an I-X ray detector 11 a high vacuum of, for instance, 10⁻⁵ Torr or better. Furthermore, in the neighborhood of the exit 1a, a slit is disposed to restrict divergence of X-rays.

The high vacuum XAFS measuring instrument illustrated in Fig. 1 has a goniometer 13 of tandem drive interlock system as a supporting device. This goniometer drives an X-ray generator 1 and a curved crystal 3 and a focusing slit 5 so as to maintain a concentration circle of a definite diameter, the focusing circle passing through an X-ray generator 1 and a curved crystal 3 and a focusing slit 5. The diameter of Rowland circle of a goniometer 13 is set at, for instance, 320 mm to obtain a high resolution. These respective units are controlled through a controller.

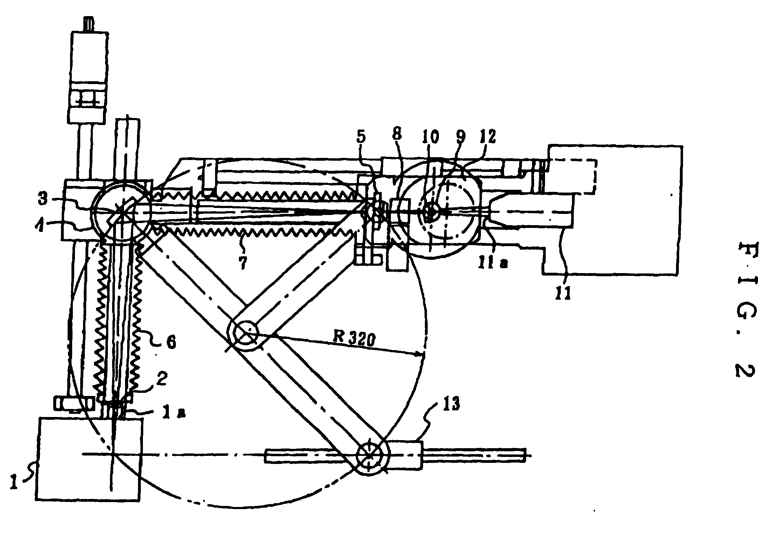

Fig. 2 is a diagram showing a schematic configuration of a second embodiment in which a first high vacuum XAFS measuring instrument of the present invention is applied in the optics for transmission measurement. The high vacuum XAFS measuring instrument shown in Fig. 2 has an I-X ray detector 11 for measuring transmitted X-rays through the sample 10.

In this case also, an I₀-X ray detector 8,a sample holder 9 and a photo-receiving surface 11a of an I-X ray detector 11 are disposed inside a vacuum chamber 12 capable of maintaining a high vacuum of, for instance, 10⁻⁵ Torr or better. By the way, other configuration than this is identical with the high vacuum XAFS measuring instrument shown in Fig. 1.

In the high vacuum XAFS measuring instruments shown in Figs. 1 and 2, an X-ray generator 1 of high output power is employed and an entire X-ray path of from an exit 1a of the X-ray generator 1 to a photo-receiving surface 11a of an I-X ray detector 11 is a high vacuum path of, for instance, 10⁻⁵ Torr or better, respectively. Furthermore, for an I₀-X ray detector 8, a photoelectron multiplier is used, the photoelectron multiplier being capable of suppressing an attenuation of primary X-rays as small as possible before irradiating on the sample 10. The intensity of the primary X-rays can be secured enough accordingly.

As a result, without restricting to XAFS of heavy elements, the XAFS of light elements such as Al, Si or the like can be measured with good quality in a laboratory. In particular, it is important that the XAFS of light elements that is comparable with that of an XAFS measuring instrument that uses an existing synchrotron radiation (SR) can be obtained in a laboratory.

In addition, by employing both of an I₀-X ray detector 8 and an I-X ray detector 11, fluorescent X-rays, or transmitted X-rays can be measured to obtain the ratios of these (I/I₀ or I₀/I). Accordingly, the XAFS of light elements such as Al, Si or the like that are used frequently as constituent elements of ceramics or semiconductor elements can be measured accurately and rapidly.

Furthermore, being able to secure the sufficient intensity of X-rays, the diameter of Rowland circle can be set at a distance of such as 320 mm as described above. Thereby, an excellent energy resolution can be obtained. That is, XAFS measurement can be carried out with high energy resolution and with high precision.

In the high vacuum XAFS measuring instruments shown in Figs. 1 and 2, the sample 10, being maintained in a high vacuum, can be prevented from being oxidized or the like. Accordingly, the interface structures and electronic states of thin films formed in the process of manufacture of semiconductor elements and ceramic bonded bodies, and elementary processes of reactions at the interfaces can be measured and evaluated more accurately with the XAFS.

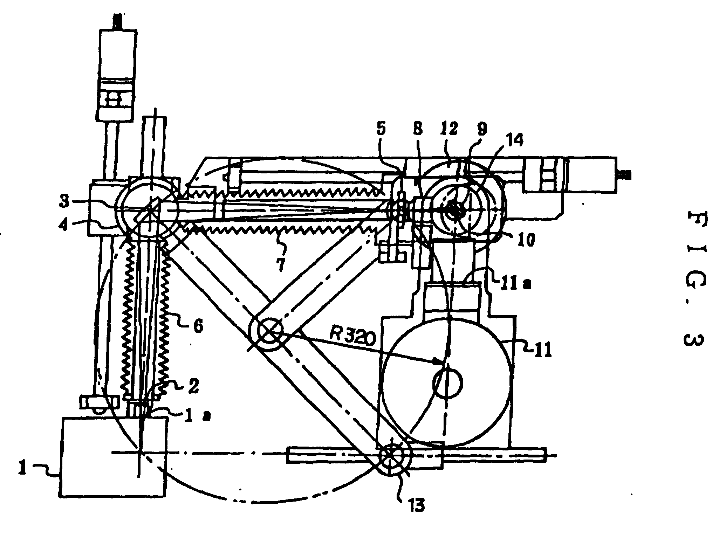

Next, an embodiment of a second high vacuum XAFS measuring instrument of the present invention will be explained. Fig. 3 is a diagram showing a schematic configuration of a first embodiment in which a second high vacuum XAFS measuring instrument of the present invention is applied in the X-ray optics of fluorescence measurement. By the way, in Fig. 3, for the same portions with those of the high vacuum XAFS measuring instrument shown in Fig. 1, the same reference numerals are given.

In the high vacuum XAFS measuring instrument shown in Fig. 3, main constituents such as an X-ray generator 1, a curved crystal 3, a focusing slit 5, vacuum paths 6 and 7, an I₀-X ray detector 8, a sample holder 9, an I-X ray detector 11, a vacuum chamber 12 and a goniometer 13 of tandem drive interlock system are identical with those of the high vacuum XAFS measuring instrument shown in Fig. 1. For the I₀-X ray detector 8, as identical with the high vacuum XAFS measuring instrument shown in Fig. 1, it is preferable to use a photoelectron multiplier capable of suppressing an attenuation of X-rays as small as possible.

In addition, though not shown in Fig. 3, the high vacuum XAFS measuring instrument of this embodiment is provided with a vacuum pump that makes an X-ray path of from an exit 1a of the X-ray generator 1 to a photo-receiving surface 11a of an X-ray detector 11 a high vacuum of, for instance, 10⁻⁵ Torr or better. Accordingly, the high vacuum XAFS measuring instrument shown in Fig. 3 is capable of maintaining an X-ray path of from an exit 1a of the X-ray generator 1 to a photo-receiving surface 11a of an X-ray detector 11 a high vacuum of, for instance, 10⁻⁵ Torr or better. Such a high vacuum X-ray path can be realized by use of vacuum paths 6 and 7 and a vacuum chamber 12.

The high vacuum XAFS measuring instrument shown in Fig. 3 further comprises a high temperature treatment furnace 14 disposed in the neighborhood of, for instance, at the upper portion of the vacuum chamber 12 as a heat treatment unit. The high temperature treatment furnace 14 enables to carry out successive heating and cooling of the sample 10 in a vacuum atmosphere.

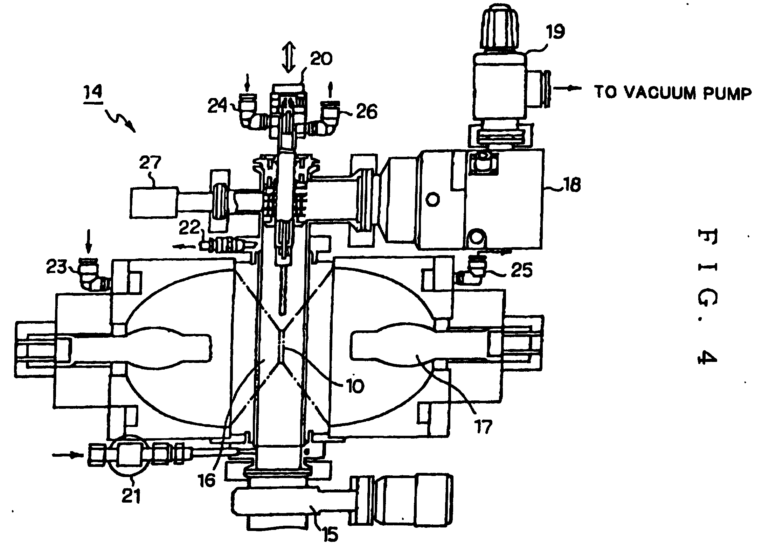

A high temperature treatment furnace 14, as shown in, for instance, Fig. 4, comprises a vacuum treatment chamber 16 capable of connecting and detaching through a vacuum chamber 12 and a gate valve 15. The vacuum treatment chamber 16 comprises a heating unit consisting of an infrared furnace 17 that realizes high temperature heating under, for instance, a clean atmosphere.

The vacuum treatment furnace 16 has another vacuum pump (not shown in the figure) separately from that on the side of a vacuum path of X-rays so as to enable maintaining a high vacuum of, for instance, 10⁻⁵ Torr or better. In the high temperature treatment furnace 14 shown in Fig. 4, a rotary pump that is not shown in the figure is connected to the vacuum treatment chamber 16 through a turbo molecular pump 18 and an L-valve 19.

The high temperature treatment furnace 14 further comprises a sample position moving unit 20 as a unit to move the sample 10 up and down between the vacuum treatment chamber 16 and a maple holding position inside the vacuum chamber 12.

The sample 10 heated in the vacuum treatment chamber 16 is quenched down to, for instance, around room temperature. Thereafter, by use of sample position moving unit 20, the sample is downed to an XAFS measuring position inside the vacuum chamber 12. At this time, the sample 10 is, in a high vacuum of, for instance, 10⁻⁵ Torr or better, transferred from the vacuum treatment chamber 16 to the XAFS measuring position inside the vacuum chamber 12. Accordingly, accompanying transfer of the sample 10, the change of state due to oxidation of the sample 10 is not caused.

Thus, in the high temperature treatment furnace 14, the sample 10 can be heated and cooled successively in a high vacuum. Accordingly, the second high vacuum XAFS measuring instrument of the present invention can be called a high temperature sample heating type high vacuum XAFS measuring instrument.

By the way, in Fig. 4, reference numeral 21 denotes a gas flow inlet, reference numeral 22 denotes a gas flow outlet, reference numerals 23 and 24 denote cooling water inlets, reference numerals 25 and 26 denote cooling water outlets and reference numeral 27 denotes a vacuum gauge.

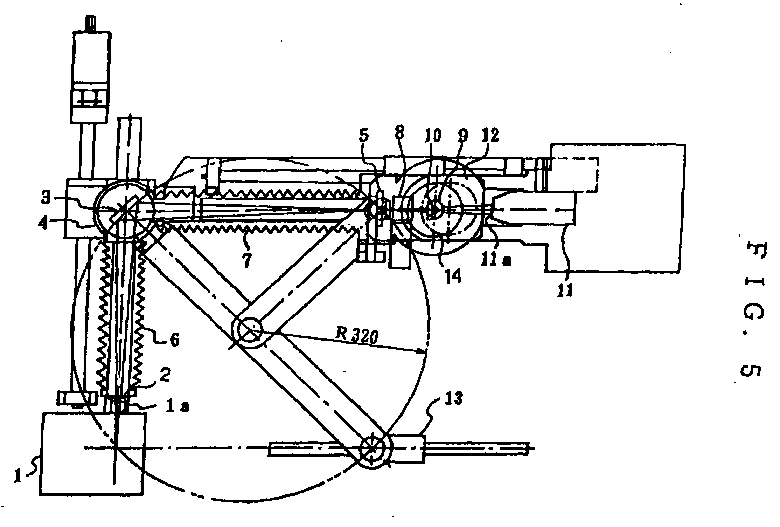

Fig. 5 is a diagram showing a schematic configuration of a second embodiment in which a second high vacuum XAFS measuring instrument of the present invention is applied in the optics for fluorescence measurement. A high vacuum XAFS measuring instrument shown in Fig. 5 has an I-X ray detector 11 for measuring X-rays transmitted through the sample 10. The high vacuum XAFS measuring instrument shown in Fig. 5 is constituted identically with the high vacuum XAFS measuring instrument shown in Fig. 2 except for having a high temperature treatment furnace 14.

In each of the high temperature heating type high vacuum XAFS measuring instruments shown in Figs. 3, 4 and 5, an X-ray generator 1 of high output power is used and an entire X-ray path from an exit 1a of the X-ray generator 1 to a photo-receiving surface 11a of an I-X ray detector 11 is made a high vacuum path of, for instance, 10⁻⁵ Torr or better. As a result of this, the intensity of the primary X-rays can be secured enough. Accordingly, without restricting to the XAFS measurement of heavy metals, XAFS measurement of light elements such as Al, Si or the like can be carried out with good quality in a laboratory. In particular, it is very important that the XAFS of light elements that is comparable with that of XAFS measuring instrument in which existing synchrotron radiation (SR) is used can be obtained in a laboratory.

In addition, not only the sample 10 can be kept in a high vacuum, but also, by use of a high temperature treatment furnace 14 connected in a vacuum to a vacuum chamber 12, heat-treatment from pretreatment of the sample 10 to XAFS measurement, further in the course of measurement of XAFS can be implemented in a high vacuum of, for instance, 10⁻⁵ Torr or better. Accordingly, the maple 10 after heat-treatment as well as the sample of ordinary state can be prevented from changing the state due to oxidation or the like.

According to such a high temperature sample heating type high vacuum XAFS measuring instrument, the interface structures and electronic states of, for instance, thin films that are formed in the course of manufacture of semiconductor elements and ceramic bonded bodies, further elementary processes of reactions at the interfaces can be measured and evaluated accurately through the XAFS. In particular, the change of interface structures due to heat-treatment or the like can be measured and evaluated more accurately.

A second high vacuum XAFS measuring instrument of the present invention, as identical as the first high vacuum XAFS measuring instrument, by use of an I₀-X ray detector 8 and an I-X ray detector 11, fluorescent X-rays, or reflected or transmitted X-rays can be measured to obtain the ratios of these (I/I₀ or I₀/I). Accordingly, the XAFS of light elements such as Al, Si or the like can be measured more accurately and more rapidly.

In addition, being able to secure the intensity of X-rays enough, the diameter of Rowland circle can be set at, for instance, 320 mm. Thereby, excellent resolution can be obtained. That is, the XAFS measurement can be carried out with high resolution and high accuracy.

### Industrial Applicability

A high vacuum XAFS measuring instrument of the present invention enables to measure XAFS of light elements such as Al, Si or the like in addition to heavy elements with high resolution and high accuracy. In particular, XAFS of light elements comparable with XAFS that is obtained by an XAFS measuring instrument that uses an existing synchrotron radiation (SR) can be measured in a laboratory. Such a high vacuum XAFS measuring instrument of the present invention can be used effectively in measuring and evaluating, for instance, interface structures and electronic states of various kinds of samples.

## Claims

1. A high vacuum XAFS measuring instrument, comprising:
an X-ray generator having an X-ray exit letting X-rays going out;
a monochromator for carrying out spectroscopic separation of X-rays gone out of the X-ray exit;
an X-ray receptor for receiving X-rays separated spectroscopically by the monochromator;
an I₀-X ray detector having a photoelectron multiplier for detecting X-rays incoming to the X-ray receptor;
a sample holder for holding a sample on which the X-rays measured initially by the I₀-X ray detector are irradiated;
an I-X ray detector for detecting X-rays transmitted through the sample or fluorescent X-rays from the sample;
a supporting unit for driving so as to maintain a focusing circle of a definite diameter, the focusing circle passing through the X-ray generator and the monochromator and the X-ray receptor;
a vacuum path for maintaining an X-ray path of from the X-ray exit to the X-ray receptor in a vacuum;
a vacuum chamber provided with the I₀-X ray detector, the sample holder and a photo-receiving surface of the I-X ray detector, and connected to the vacuum path in a vacuum; and
a counting controller for controlling the supporting unit, the I₀-X ray detector and I-X ray detector.

2. The high vacuum XAFS measuring instrument as set forth in claim 1, further comprising:
a vacuum pump for maintaining the insides of the vacuum path and the vacuum chamber in a high vacuum of 10⁻⁵ Torr or better.

3. The high vacuum XAFS measuring instrument as set forth in claim 1:
wherein the monochromator comprises a curved crystal disposed inside of a crystal chamber, and the X-ray exit of the X-ray generator and the curved crystal chamber are connected by the vacuum path.

4. The high vacuum XAFS measuring instrument as set forth in claim 3:
wherein the X-ray receptor comprises a focusing slit, and vacuum chamber and the focusing slit are connected by the vacuum path.

5. The high vacuum XAFS measuring instrument as set forth in claim 1:
wherein the supporting unit comprises a goniometer of tandem drive interlock system.

6. The high vacuum XAFS measuring instrument as set forth in claim 1:
wherein the high vacuum XAFS measuring instrument is characterized in measuring XAFS of light elements in the sample.

7. A high vacuum XAFS measuring instrument, comprising:
an X-ray generator having an X-ray exit letting X-rays going out;
a monochromator for carrying out spectroscopic separation of X-rays gone out of the X-ray exit;
an X-ray receptor for receiving X-rays separated spectroscopically by the monochromator;
an I₀-X ray detector for detecting the X-rays gone through the X-ray receptor;
a sample holder for holding a sample on which the X-rays measured initially by the I₀-X ray detector are irradiated;
an I-X ray detector for detecting X-rays transmitted through the sample or fluorescent X-rays from the sample;
a supporting unit for driving so as to maintain a focusing circle of a definite diameter, the focusing circle passing through the X-ray generator and the monochromator and the X-ray receptor;
a vacuum path for maintaining an X-ray path of from the X-ray exit to the X-ray receptor in a vacuum;
a vacuum chamber provided with the I₀-X ray detector, the sample holder and the I-X ray detector, and connected to the vacuum path in a vacuum;
a heat-treatment unit that carries out successively heating and cooling of the sample in a vacuum atmosphere and is connected to the vacuum chamber in a vacuum; and
a counting controller for controlling the supporting unit, the I₀-X ray detector and I-X ray detector.

8. The high vacuum XAFS measuring instrument as set forth in claim 7, further comprising:
a vacuum pump for maintaining the insides of the vacuum path and the vacuum chamber in a high vacuum of 10⁻⁵ Torr or better.

9. The high vacuum XAFS measuring instrument as set forth in claim 7:
wherein the heat-treatment unit comprises;
a vacuum-treatment chamber connected in a vacuum to the vacuum chamber;
a transfer unit for transferring the sample between the vacuum-treatment chamber and the sample holder; and
a heating unit for heating the sample disposed inside the vacuum-treatment chamber.

10. The high vacuum XAFS measuring instrument as set forth in claim 9:
wherein the heat-treatment unit further comprises a vacuum pump for maintaining the inside of the vacuum-treatment chamber in a high vacuum of 10⁻⁵ Torr or better.

11. The high vacuum XAFS measuring instrument as set forth in claim 7:
wherein the monochromator comprises a curved crystal disposed inside of a vacuum chamber, and the X-ray exit of the X-ray generator and the vacuum chamber are connected by the vacuum path.

12. The high vacuum XAFS measuring instrument as set forth in claim 11:
wherein the X-ray receptor comprises a focusing slit, the vacuum chamber and the focusing slit being connected by the vacuum path.

13. The high vacuum XAFS measuring instrument as set forth in claim 7:
wherein the supporting unit comprises a goniometer of tandem drive interlock system.

14. The high vacuum XAFS measuring instrument as set forth in claim 7:
wherein the I₀-X ray detector comprises a photoelectron multiplier.

15. The high vacuum XAFS measuring instrument as set forth in claim 7:
wherein the high vacuum XAFS measuring instrument is characterized in measuring XAFS of light elements in the sample.

## Amended claims

### Amended claims under Art. 19.1 PCT

1. (Amended). A high vacuum XAFS measuring instrument, comprising:
a rotating-anode type X-ray generator having an X-ray exit letting X-rays go out;
a monochromator for carrying out spectroscopic separation of X-rays gone out of the X-ray exit;
an X-ray receptor for receiving X-rays separated spectroscopically by the monochromator;
an I₀-X ray detector having a photoelectron multiplier for detecting X-rays passed the X-ray receptor;
a sample holder for holding a sample on which the X-rays measured initially by the I₀-X ray detector are irradiated;
an I-X ray detector for detecting X-rays transmitted through the sample or fluorescent X-rays from the sample;
a goniometer of tandem drive interlock system for driving so as to maintain a focusing circle of a definite diameter, the focusing circle passing through the X-ray generator and the monochromator and the X-ray receptor;
a vacuum path for maintaining an X-ray path from the X-ray exit to the X-ray receptor in a vacuum;
a vacuum chamber provided with the I₀-X ray detector, the sample holder and the I-X ray detector, and connected to the vacuum path in a vacuum;
an exhaust unit for maintaining the insides of the vacuum path and the vacuum chamber in a high vacuum of 10⁻⁵ Torr or less; and
a counting controller for controlling the goniometer, the I₀-X ray detector and the I-X ray detector.

2. (Deleted).

3. The high vacuum XAFS measuring instrument as set forth in claim 1:
wherein the monochromator comprises a curved crystal disposed inside of the curved crystal chamber, and the X-ray exit of the X-ray generator and the curved crystal chamber are connected by the vacuum path.

4. The high vacuum XAFS measuring instrument as set forth in claim 3:
wherein the X-ray receptor comprises a focusing slit, and the crystal chamber and the focusing slit are connected by the vacuum path.

5. (Deleted).

6. The high vacuum XAFS measuring instrument as set forth in claim 1:
wherein the high vacuum XAFS measuring instrument is characterized in measuring XAFS of light elements in the sample.

7. (Amended). The high vacuum XAFS measuring instrument as set forth in claim 1, further comprising:
a heat-treatment unit that carries out successively heating and cooling of the sample in a vacuum atmosphere and is connected in a vacuum to the vacuum chamber.

8. (Deleted).

9. The high vacuum XAFS measuring instrument as set forth in claim 7:
wherein the heat-treatment unit comprises;
a vacuum-treatment chamber connected in a vacuum to the vacuum chamber;
a transfer unit for transferring the sample between the vacuum-treatment chamber and the sample holder; and
a heating unit for heating the sample disposed inside the vacuum-treatment chamber.

10. The high vacuum XAFS measuring instrument as set forth in claim 9:
wherein the heat-treatment unit further comprises a vacuum pump for maintaining the inside of the vacuum-treatment chamber in a high vacuum of 10⁻⁵ Torr or less.

11. (Deleted).

12. (Deleted).

13. (Deleted).

14. (Deleted).

15. (Deleted).
